# EUROPEAN PATENT SPECIFICATION

(11) **EP 1 223 107 B1**
(45) Date of publication and mention of the grant of the patent: **18.08.2004**
(21) Application number: 02000702.7
(22) Date of filing: 11.01.2002
(51) Int. Cl.: B65B 59/00, B65B 25/14, B65B 35/40, B65B 35/50, B65G 57/24, B65G 47/82

(54) **Device for unloading orderly groups of rolls of paper**
Vorrichtung zum Entladen von geordneten Gruppen von Papierrollen
Dispositif pour décharger des groupes ordonnées des rouleaux de papier

(30) Priority: 12.01.2001 IT TO010018
(43) Date of publication of application: 17.07.2002
(73) Proprietor: KPL Packaging S.p.A., 40033 Casalecchio di Reno (IT)
(72) Inventor: Cinotti, Andrea, 40141 Bologna (IT); Bonafe' Giorgio, 40033 Casalecchio di Reno (IT)
(74) Representative: Jorio, Paolo, Dr. Ing.

(56) References cited:
- EP-A- 1 067 048
- DE-A- 19 838 076
- FR-A- 2 259 750
- US-A- 4 875 328
- US-A- 5 671 837
- PATENT ABSTRACTS OF JAPAN vol. 017, no. 439 (M-1462), 13 August 1993 (1993-08-13) & JP 05 097220 A (MITA IND CO LTD), 20 April 1993 (1993-04-20)

## Description

The present invention relates to a device for unloading orderly groups of rolls of paper.

The present invention may be used to advantage, for example, for processing rolls of toilet tissue, to which the following description refers purely by way of example.

On machines for processing rolls of toilet tissue, the rolls are formed into groups comprising a number of superimposed layers, each defined by a number of rolls arranged in a number of parallel rows.

Since the newly formed groups of rolls are fairly unstable in shape, known processing machines are continually faced with the problem of unloading them with no alteration in shape, which would seriously complicate any follow-up processing of the groups.

Document DE 198 38 076 A1 discloses a device for unloading orderly groups of rolls on a machine for processing rolls. Each group comprises rolls arranged in a first number of superimposed layers, and each layer comprises a second number of side by side rows.

The device comprises an unloading channel extending in a given direction and defined laterally by two walls; feed means for feeding said groups successively to an unloading position aligned with an inlet of the unloading channel; and a pusher for feeding each group along the unloading channel from the unloading position. The pusher is movable back and forth along the unloading channel from a cycle-start position upstream from the unloading position in the given direction.

It is an object of the present invention to provide a device of unloading groups of rolls of paper, which is straightforward and cheap to implement, while at the same time enabling continuous control of the shape of the groups as they are unloaded.

According to the present invention there is provided a device as claimed in Claim 1.

A number of non-limiting embodiments of the present invention will be described by way of example with reference to the accompanying drawings, in which:
Figure 1 shows a partial, schematic view in perspective of a preferred embodiment of the unloading device according to the present invention;
Figure 2 shows a view in perspective of a variation of a detail in Figure 1.

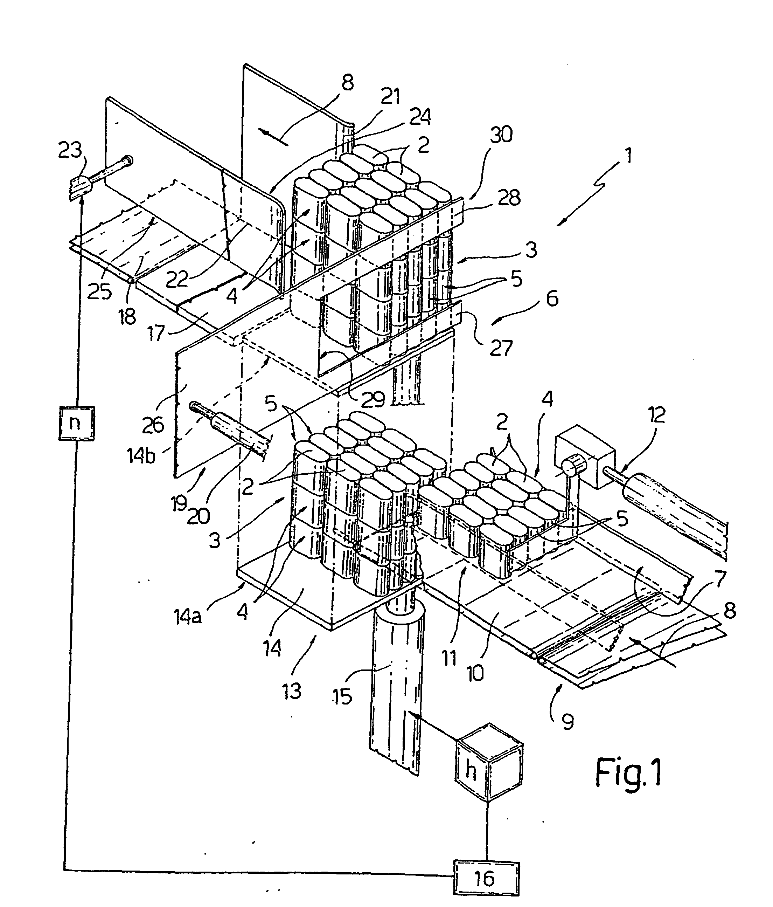

Number 1 in Figure 1 indicates as a whole a machine for forming rolls 2 of paper - in particular, rolls of toilet tissue - into groups 3, each of which is defined by a number of rolls 2 arranged in a given adjustable h number of superimposed layers 4, and, in each layer 4, in a given adjustable n number of parallel, side by side rows 5, each comprising a given adjustable number of rolls 2, which is the same for all of rows 5.

Machine 1 comprises a unit 6 for forming and unloading groups 3, and which is located at the outlet of a channel 7 adjustable in width and along which layers 4 are fed successively in a direction 8 by a step-operated feed device 9 comprising an output conveyor 10 for feeding layers 4 successively to a transfer position 11 where layers 4 are transferred to unit 6 by a known reciprocating pusher 12.

Unit 6 comprises a device 13 for forming groups 3, and which is located immediately downstream from the output end of conveyor 10, and in turn comprises a platform 14 moved vertically by an actuator 15. Actuator 15 is controlled by a central control unit 16 to move platform 14 down in steps, of a length approximately equal to but no less than the height of an upright roll 2, from a start position in which platform 14 is coplanar with the conveying branch of conveyor 10, so as to load a given h number of layers 4 successively on to platform 14.

Actuator 15 also provides for lifting platform 14 into a raised unloading position in which platform 14 is coplanar with an unloading platform 17 interposed between device 13 and an unloading conveyor 18 for receiving the groups 3 unloaded off platform 14 by a pusher 19 moved back and forth in direction 8 by an actuator 20.

Platform 17 and conveyor 18 are associated with two lateral retaining walls 21 and 22. Wall 21 is fixed transversely, while wall 22 is movable transversely, by an actuator 23 controlled by central control unit 16 as a function of the selected n number, to and from wall 21 to define, with wall 21, a channel 24 adjustable in width and for unloading groups 3 off machine 1.

To enable pusher 19 to move along unloading channel 24 and engage the full width (measured crosswise to direction 8) of each group 3, regardless of the n number of rows 5 in layers 4 and, hence, the position of wall 22 with respect to wall 21, wall 22 is raised with respect to the plane of platform 17 and unloading conveyor 18 to define, with platform 17 and unloading conveyor 18, a gap 25 of a height preferably smaller than that of a roll 2, and unloading pusher 19 is made substantially U-shaped. More specifically, unloading pusher 19 comprises a flat, substantially rectangular plate 26 located to the side of and above platform 17 and unloading conveyor 18, and connected to actuator 20 to move back and forth in direction 8; and two push arms 27 and 28, which are parallel to the plane of unloading platform 17, extend crosswise to direction 8 from an end edge 29, facing unit 6, of plate 26, and are longer than the maximum width of channel 24. More specifically, arms 27 and 28 are located one over the other, with arm 27 beneath arm 28 and movable substantially in contact with the top surfaces of platform 17 and unloading conveyor 18. Moreover, arm 27 is separated from arm 28 by a distance greater than the height of wall 22, and is smaller in height than gap 25 so as to slide along gap 25, while arm 28 moves over wall 22, and plate 26 moves in direction 8 outside channel 24.

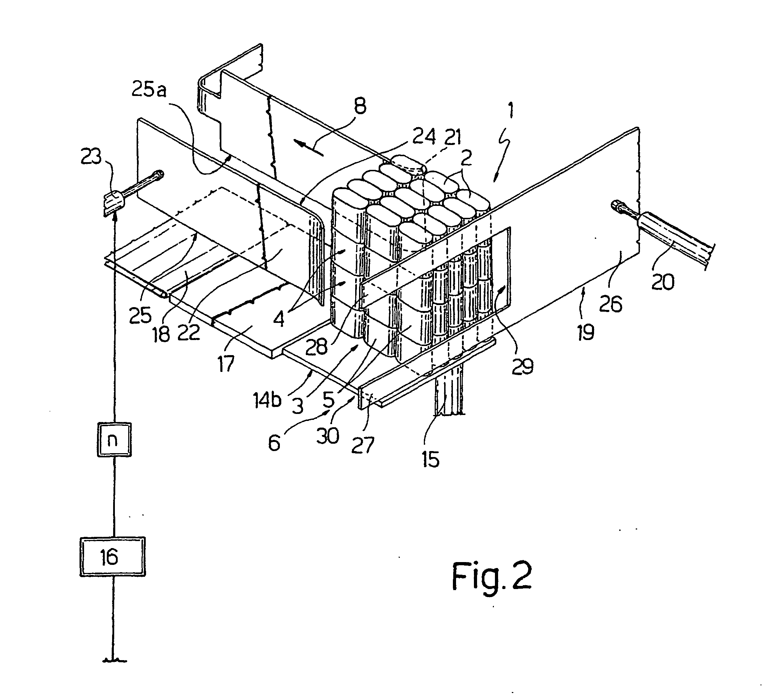

In the Figure 1 embodiment, plate 26 is located on the wall 22 side so as to remain outwards of wall 22 regardless of the position of wall 22 with respect to wall 21 as a function of the selected n number; while push arms 27 and 28 extend so as to substantially contact the inner surface of wall 21. Preferably, however, in the Figure 2 variation, plate 26 is located outside channel 24, on the fixed wall 21 side, with edge 29 substantially contacting the outer surface of wall 21, and wall 21 is also raised with respect to the plane of platform 17 and unloading conveyor 18 to define, with platform 17 and unloading conveyor 18, a gap 25a of the same height as gap 25 and for permitting passage of arm 27.

Unloading pusher 19, therefore, need not be adapted in any way to the transverse position assumed by wall 22 as a function of the selected n number, by virtue of the location of plate 26 outside unloading channel 24 and the shape and size of the fork 30 defined by arms 27 and 28 enabling wall 22 to be set to any of its possible positions without interfering with pusher 19. Moreover, pusher 19 provides for perfectly controlling the shape of groups 3 as they are fed along unloading channel 24, by virtue of arm 27 permanently controlling the position of bottom layer 4 - which is the layer 4 most likely to shift with respect to the others - while arm 28, in the case of groups 3 with a relatively large number of layers 4, engages and prevents the top layer/s 4 from moving by force of inertia with respect to the lower layers 4.

Another point to note is the relatively straightforward, economic way in which pusher 19 can be operated, by virtue of groups 3 being formed on platform 14 and unloaded in two positions - a forming position 14a and an unloading position 14b - located in two different superimposed planes separated by a distance greater than the maximum height of group 3. As a result, pusher 19 can be restored to the cycle-start position - immediately upstream, in direction 8, from device 13 forming groups 3 - without interfering with a group 3 being formed on platform 14.

## Claims

1. A device for unloading orderly groups (3) of rolls (2) of paper on a machine for processing rolls (2); each group (3) comprising rolls (2) arranged in a first number (h) of superimposed layers (4), and each layer (4) comprising a second number (n) of side by side rows (5); and the device (6) comprising an unloading channel (24) extending in a given direction (8) and defined laterally by a first and a second wall member (22, 21); feed means (14, 15) for feeding said groups (3) successively to an unloading position (14b) aligned with an inlet of said unloading channel (24); and a pusher (19) for feeding each said group (3) along said unloading channel (24) from said unloading position (14b), said pusher (19) being movable back and forth along said unloading channel (24) from a cycle-start position upstream from said unloading position (14b) in said direction (8); and being **characterized by** comprising logic means (16) for predetermining a said first and a said second number (h, n) from respective ranges; at least said first wall member (22) being movable to and from said second wall member (22) crosswise to said direction (8); actuating means (23) being connected to said first wall means (22) to set a width of said unloading channel (24) as a function of said second number (n); the pusher (19) being a fork-shaped pusher (19) which is penetrated by at least said first wall member (22) and which comprises a bottom arm (27) and a top arm (28), both extending across the unloading channel (24), crosswise to said direction (8), and both movable in said direction (8) along the unloading channel (24); and said arms (27, 28) being of a length greater than the maximum width of said unloading channel (24).

2. A device as claimed in Claim 1, wherein said feed means (14, 15) comprise supporting means (14) for supporting said groups (3); said supporting means (14) being movable between said unloading position (14b) and a group-forming position (14a) located at a different level from that of said unloading position (14b).

3. A device as claimed in Claim 2, wherein said two levels are superimposed and separated by a distance greater than a maximum height of a said group (3).

4. A device as claimed in anyone of the foregoing Claims, wherein said fork-shaped pusher (19) comprises a plate (26) located to the side of said unloading channel (24) and crosswise to said direction (8); said two arms (27, 28) being coplanar with each other and with said plate (26), and extending from a lateral edge (29), facing said unloading channel (24), of said plate (26).

5. A device as claimed in Claim 4, wherein said fork-shaped pusher (19) faces said second wall member (21); at least said first wall member (22) being raised a given distance with respect to said unloading position (14b); and said bottom arm (27) being of a height smaller than said distance.

6. A device as claimed in Claim 4 or 5, wherein said lateral edge (29) of said plate (26) is separated from said second wall member (21) by a distance greater than a width of said unloading channel (24).

7. A device as claimed in anyone of the foregoing Claims, wherein said two arms (27, 28) are separated by a distance greater than a height of said first wall member (22).

8. A device as claimed in anyone of the foregoing Claims, wherein said second wall member (21) is fixed, and said fork-shaped pusher (19) faces said first wall member (22); both said first and second wall members (22, 21) being raised a given distance with respect to said unloading position (14b); and said bottom arm (27) being of a height smaller than said distance.

9. A device as claimed in anyone of the Claims 4 to 8, wherein said lateral edge (29) of said plate (26) is located outside said unloading channel (24) and adjacent to said second wall member (21).

10. A device as claimed in anyone of the foregoing Claims, wherein said first and second wall members (22, 21) are of the same height; and said two arms (27, 28) are separated by a distance greater than said height.

## Patentansprüche

1. Vorrichtung für das geordnete Ausschieben von Gruppen (3) von Rollen (2) aus Papier auf einer Maschine für das Bearbeiten von Rollen (2), wobei jede Gruppe (3) Rollen (2) umfasst, welche in einer ersten Anzahl (h) übereinander gelagerter Lagen (4) angeordnet sind, und jede Lage (4) eine zweite Anzahl (n) von nebeneinander angeordneten Reihen (5) umfasst und die Vorrichtung (6) umfasst: einen Ausschiebekanal (24), welcher sich in einer bestimmten Richtung (8) erstreckt und seitlich durch ein erstes und ein zweites Wandelement (22, 21) ausgebildet wird; Fördermittel (14, 15) für das nacheinander folgende Zuführen der Gruppen (3) zu einer Ausschiebeposition (14b), welche mit einem Einlass des Ausschiebekanals (24) ausgerichtet ist; und einen Schieber (19) für das Zuführen jeder Gruppe (3) von der Ausschiebeposition (14b) entlang des Ausschiebekanals (24), wobei der Schieber (19) entlang des Ausschiebekanals (24) von einer Position zu Beginn des Zyklus stromaufwärts der Ausschiebeposition (14b) in der Richtung (8) vor und zurück bewegbar ist, und **dadurch gekennzeichnet ist, dass** sie Logikmittel (16) für das Vorbestimmen einer ersten und zweiten Anzahl (h, n) aus jeweiligen Bereichen umfasst, wobei mindestens das erste Wandelement (22) von dem zweiten Wandelement (22) quer zu der Richtung (8) hin und her bewegbar ist; ein Betätigungsmittel (23) mit dem ersten Wandmittel (22) verbunden ist, um eine Breite des Ausschiebekanals (24) als Funktion der zweiten Anzahl (n) festzulegen; der Schieber (19) ein gabelförmiger Schieber (19) ist, welcher durch mindestens das erste Wandelement (22) durchsetzt wird und welcher einen unteren Arm (27) und einen oberen Arm (28) umfasst, welche sich beide quer über den Ausschiebekanal (24) quer zur Richtung (8) erstrecken und beide in der Richtung (8) entlang des Ausschiebekanals (24) bewegbar sind, und wobei die Länge der Arme (27, 28) größer als die maximale Breite des Ausschiebekanals (24) ist.

2. Vorrichtung nach Anspruch 1, **dadurch gekennzeichnet, dass** die Fördermittel (14, 15) Stützmittel (14) für das Stützen der Gruppen (3) umfassen, wobei die Stützmittel (14) zwischen der Ausschiebeposition (14b) und einer gruppierenden Position (14a), welche auf einer anderen Höhe als die Ausschiebeposition (14b) angeordnet ist, bewegbar sind.

3. Vorrichtung nach Anspruch 2, **dadurch gekennzeichnet, dass** die beiden Höhen übereinander angeordnet sind und durch einen Abstand von mehr als einer maximalen Höhe einer Gruppe (3) getrennt sind.

4. Vorrichtung nach einem der vorstehenden Ansprüche, **dadurch gekennzeichnet, dass** der gabelförmige Schieber (19) eine seitlich des Ausschiebekanals (24) und quer zur Richtung (8) angeordnete Platte (26) umfasst, wobei die beiden Arme (27, 28) komplanar zueinander und zur Platte (26) sind und sich von einer dem Ausschiebekanal (24) zugewandten Seitenkante (29) der Platte (26) erstrecken.

5. Vorrichtung nach Anspruch 4, **dadurch gekennzeichnet, dass** der gabelförmige Schieber (19) dem zweiten Wandelement (21) zugewandt ist, wobei sich mindestens das erste Wandelement (22) bei einem bestimmten Abstand bezüglich der Ausschiebeposition (14b) erhebt und der untere Arm (27) eine Höhe aufweist, die kleiner als dieser Abstand ist.

6. Vorrichtung nach Anspruch 4 oder 5, **dadurch gekennzeichnet, dass** die Seitenkante (29) der Platte (26) von dem zweiten Wandelement (21) um einen Abstand größer als eine Breite des Ausschiebekanals (24) getrennt ist.

7. Vorrichtung nach einem der vorstehenden Ansprüche, **dadurch gekennzeichnet, dass** die beiden Arme (27, 28) um einen Abstand größer als eine Höhe des ersten Wandelements (22) getrennt sind.

8. Vorrichtung nach einem der vorstehenden Ansprüche, **dadurch gekennzeichnet, dass** das zweite Wandelement (21) fest ist und der gabelförmige Schieber (19) dem ersten Wandelement (22) zugewandt ist, wobei sich sowohl das erste als auch das zweite Wandelement (22, 21) bei einem bestimmten Abstand bezüglich der Ausschiebeposition (14b) erheben und der untere Arm (27) eine Höhe aufweist, welche kleiner als dieser Abstand ist.

9. Vorrichtung nach einem der Ansprüche 4 bis 8, **dadurch gekennzeichnet, dass** die Seitenkante (29) der Platte (26) außerhalb des Ausschiebekanals (24) und angrenzend an dem zweiten Wandelement (21) angeordnet ist.

10. Vorrichtung nach einem der vorstehenden Ansprüche, **dadurch gekennzeichnet, dass** das erste und das zweite Wandelement (22, 21) von gleicher Höhe sind und die beiden Arme (27, 28) um einen Abstand größer als diese Höhe getrennt sind.

## Revendications

1. Dispositif pour décharger des groupes ordonnés (3) de rouleaux (2) de papier sur une machine de traitement de rouleaux (2) ; chaque groupe (3) comportant des rouleaux (2) agencés en un premier nombre (h) de couches superposées (4), et chaque couche (4) comportant un second nombre (n) de rangs côte à côte ; et le dispositif (6) comportant un canal de déchargement (24) s'étendant dans une direction donnée (8) et défini latéralement par des premier et second éléments de paroi (22, 21) ; des moyens d'alimentation (14, 15) pour amener lesdits groupes (3) successivement vers une position de déchargement (14b) alignée avec une entrée dudit canal de déchargement (24) ; et un organe de poussée (19) pour amener chacun desdits groupes (3) le long dudit canal de déchargement (24) à partir de ladite position de déchargement (14b), ledit organe de poussée (19) étant mobile en va-et-vient le long dudit canal de déchargement (24) à partir d'une position de début de cycle située en amont de ladite position de déchargement (14b) dans ladite direction (8) ; et étant **caractérisé en ce qu'**il comporte des moyens logiques (16) pour déterminer desdits premier et second nombres (h, n) à partir de plages respectives ; au moins ledit premier élément de paroi (22) pouvant s'approcher et s'éloigner dudit second élément de paroi (22) transversalement à ladite direction (8) ; des moyens d'actionnement (23) étant connectés auxdits premiers moyens de paroi (22) pour régler une largeur dudit canal de déchargement (24) en fonction dudit second nombre (n) ; l'organe de poussée (19) étant un organe de poussée en forme de fourche (19) qui est pénétré par au moins ledit premier élément de paroi (22) et qui comporte un bras inférieur (27) et un bras supérieur (28), tous deux s'étendant à travers le canal de déchargement (24), transversalement à ladite direction (8), et tous deux mobiles dans ladite direction (8) le long du canal de déchargement (24) ; et lesdits bras (27, 28) étant d'une longueur supérieure à la largeur maximum dudit canal de déchargement (24).

2. Dispositif selon la revendication 1, dans lequel lesdits moyens d'alimentation (14, 15) comportent des moyens de support (14) pour supporter lesdits groupes (3) ; lesdits moyens de support (14) étant mobiles entre ladite position de déchargement (14b) et une position de formation de groupe (14a) située à un niveau différent de celui de ladite position de déchargement (14b).

3. Dispositif selon la revendication 2, dans lequel lesdits deux niveaux sont superposés et séparés par une distance supérieure à une hauteur maximum d'un dit groupe (3).

4. Dispositif selon l'une quelconque des revendications précédentes, dans lequel ledit organe de poussée en forme de fourche (19) comporte une plaque (26) située sur le côté dudit canal de déchargement (24) et transversale à ladite direction (8) ; lesdits deux bras (27, 28) étant coplanaires l'un avec à l'autre et avec ladite plaque (26), et s'étendant à partir d'un bord latéral (29), en vis-à-vis dudit canal de déchargement (24), de ladite plaque (26).

5. Dispositif selon la revendication 4, dans lequel ledit organe de poussée en forme de fourche (19) est en vis-à-vis dudit second élément de paroi (21) ; au moins ledit premier élément de paroi (22) étant élevé d'une distance donnée par rapport à ladite position de déchargement (14b) ; et ledit bras inférieur (27) étant d'une hauteur plus petite que ladite distance.

6. Dispositif selon la revendication 4 ou 5, dans lequel ledit bord latéral (29) de ladite plaque (26) est séparé dudit second élément de paroi (21) d'une distance supérieure à une largeur dudit canal de déchargement (24).

7. Dispositif selon l'une quelconque des revendications précédentes, dans lequel lesdits deux bras (27, 28) sont séparés par une distance supérieure à une hauteur dudit premier élément de paroi (22).

8. Dispositif selon l'une quelconque des revendications précédentes, dans lequel ledit second élément de paroi (21) est fixe, et ledit organe de poussée en forme de fourche (19) est en vis-à-vis du premier élément de paroi (22) ; lesdits premier et second éléments de paroi (22, 21) étant tous deux élevés d'une distance donnée par rapport à ladite position de déchargement (14b) ; et ledit bras inférieur (27) étant d'une hauteur plus petite que ladite distance.

9. Dispositif selon l'une quelconque des revendications 4 à 8, dans lequel ledit bord latéral (29) de ladite plaque (26) est situé à l'extérieur dudit canal de déchargement (24) et adjacent audit second élément de paroi (21).

10. Dispositif selon l'une quelconque des revendications précédentes, dans lequel lesdits premier et second éléments de paroi (22, 21) ont la même hauteur ; et lesdits deux bras (27, 28) sont séparés d'une distance supérieure à ladite hauteur.
